# EUROPEAN PATENT APPLICATION

(11) **EP 2 472 435 A2**
(43) Date of publication of application: **04.07.2012**
(21) Application number: 11195928.4
(22) Date of filing: 28.12.2011
(51) Int. Cl.: G06K 7/10, G02B 3/00, H04N 1/00

(54) **Bar code imager**

(30) Priority: 30.12.2010 US 981893
(71) Applicant: Honeywell International Inc., Morristown, NJ 07962 (US)
(72) Inventor: Fritz, Bernard S., Morristown, NJ New Jersey 07962 (US); Cox, James A., Morristown, NJ New Jersey 07962 (US); Reutiman, Peter L., Morristown, NJ New Jersey 07962 (US)
(74) Representative: Buckley, Guy Julian

(57) **Abstract**

Bar code imagers (100) and methods of operating bar code imagers are described herein. One or more embodiments include a lens (102), wherein the lens has a focal length associated therewith, and a light-emitting diode (104), wherein the light-emitting diode (104) is located within the focal length associated with the lens (102).

## Description

### Technical Field

The present disclosure relates to bar code imagers and methods of illumination used in such devices.

### Background

A bar code is a representation of data, such as, for instance, an optical machine-readable representation of data. For example, a bar code can represent data using a number of parallel lines and/or the spacing between the lines. Such a bar code can be referred to as a one-dimensional bar code.

As an additional example, a bar code can represent data using a number of geometrical shapes and or patterns, such as, for instance, squares, dots, and/or hexagons, among other geometrical shapes and/or patterns. Such a bar code can be referred to as a two-dimensional bar code.

A bar code can be used to represent data associated with a product or products. For example, a bar code representing data associated with a product(s) can be placed on the product(s) (e.g., on the packaging of the product(s) or on the container containing the product(s)).

A bar code imager can be used to create an image of a bar code. The bar code imager can create the image of the bar code by, for example, illuminating the bar code in the case of a low ambient light environment. The image of the bar code can then be used to determine (e.g., read) the data represented by the bar code.

The illumination module of a bar code imager can include, for example, a light-emitting diode (LED) only, or also can include a lens. Light emitted by the LED can illuminate a bar code located near (e.g., a few inches from) the bar code imager to create an image of the bar code.

However, a bar code imager illumination module consisting only of an LED may not effectively illuminate a bar code located farther away from (e.g., at least two feet from) the bar code imager, such as, for instance, a bar code on a product located on a shelf in a warehouse. For instance, the large divergence of an LED can greatly reduce the irradiance at large ranges.

A lens may be used to reduce the divergence and hence increase the irradiance at large ranges. However, LEDs can have electrode traces that cause the emitting area of the LED to have a patterned radiance. When such an LED is used with a lens, the illumination of a bar code (e.g., the irradiance at a bar code) located farther away from the bar code imager may not be substantially uniform (e.g., may not be distributed substantially uniformly). For instance, the illumination of a bar code located farther away from the bar code imager may be a structured illumination (e.g., some portions of the bar code may be less illuminated than others).

Because a bar code imager using a lens to image an LED on to the bar code may not effectively illuminate a bar code located farther away from (e.g., at least two feet from) the bar code, such a bar code imager may create an inaccurate and/or incomplete image of a bar code located farther away from the bar code imager.

### Brief Description of the Drawings

Figure 1 illustrates a portion of a bar code imager in accordance with one or more embodiments of the present disclosure.
Figure 2 illustrates a portion of a bar code imager in accordance with one or more embodiments of the present disclosure.

### Detailed Description

Bar code imagers and methods of operating bar code imagers are described herein. One or more embodiments include a lens, wherein the lens has a focal length associated therewith, and a light-emitting diode, wherein the light-emitting diode is located within the focal length associated with the lens.

Bar code imagers in accordance with one or more embodiments of the present disclosure can effectively illuminate and/or create an accurate and/or complete image of a bar code from farther away than previous bar code imagers. For example, a bar code imager in accordance with one or more embodiments of the present disclosure can effectively illuminate and/or create an accurate and/or complete image of a bar code that is at least two feet from the bar code imager, such as, for instance, a bar code on a product located on a shelf in a warehouse.

As an example, the illumination of a bar code located at least two feet from a bar code imager in accordance with one or more embodiments of the present disclosure may be substantially uniform across the bar code. That is, the irradiance at a surface of the bar code may be distributed substantially uniformly across the surface of the bar code. For instance, the illumination of a bar code located at least two feet from a bar code imager in accordance with one or more embodiments of the present disclosure may be a non-structured illumination (e.g., substantially all portions of the bar code may be illuminated approximately equally).

In the following detailed description, reference is made to the accompanying drawings that form a part hereof. The drawings show by way of illustration how one or more embodiments of the disclosure may be practiced. These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

As used herein, "a" or "a number of" something can refer to one or more such things. For example, "a number of mirrors" can refer to one or more mirrors.

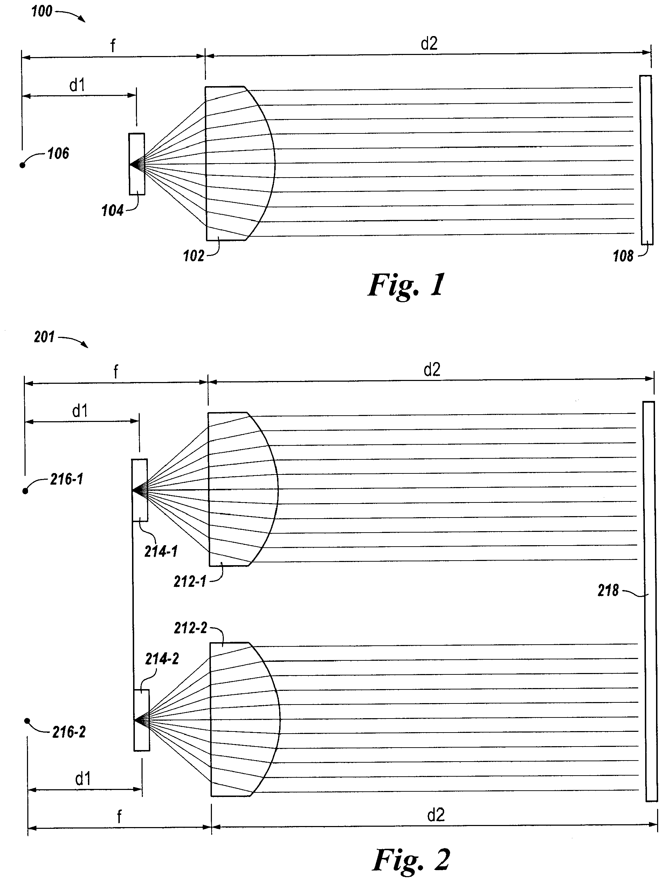

Figure 1 illustrates a portion of a bar code imager 100 in accordance with one or more embodiments of the present disclosure. As shown in Figure 1, bar code imager 100 includes a lens 102 and a light-emitting diode (LED) 104.

Lens 102 can have a focal point 106 associated therewith, as illustrated in Figure 1. Focal point 106 can be, for example, the point at which collimated light (e.g., light whose rays are nearly parallel) passing through lens 102 becomes focused, as will be appreciated by one of skill in the art.

Lens 102 can also have a focal length f associated therewith, as illustrated in Figure 1. Focal length *f* can be, for example, the distance over which collimated light passing through lens 102 is brought to a focus, as will be appreciated by one of skill in the art.

As shown in Figure 1, LED 104 is located within focal length f associated with lens 102. That is, LED 104 is located between lens 102 and focal point 106, as illustrated in Figure 1.

LED 104 can be located a distance d1 from focal point 106, as illustrated in Figure 1. Distance d1 can be, for example, 50 micrometers, 100 micrometers, or 150 micrometers. However, embodiments of the present disclosure are not limited to a particular distance between LED 104 and focal point 106.

Lens 102 can be a movable lens. That is, the position of lens 102 can be moved (e.g., translated) within bar code imager 100. Moving the position of lens 102 may move the position of focal point 106. That is, moving the position of lens 102 may change the distance d1 between LED 104 and focal point 106. For example, defocusing lens 102 (e.g., moving lens 102 to the left) in the embodiment illustrated in Figure 1 may move the position of focal point 106 to the left, which may increase the distance d1 between LED 104 and focal point 106.

In the embodiment illustrated in Figure 1, lens 102 is an aspheric lens (e.g., the surfaces of lens 102 have a profile that is rotationally symmetric, but is not a portion of a sphere). Lens 102 can also be a glass lens. Such lens types can, for example, increase the effectiveness (e.g., the illumination effectiveness) and/or decrease the size of bar code imager 100. However, embodiments of the present disclosure are not limited to a particular type of lens. For example, Lens 102 can also be a concave lens (e.g., a lens having at least one surface that is concave) or a convex lens (e.g., a lens having at least one surface that is convex), among other types of lenses.

Lens 102 can have a numerical aperture (e.g., range of angles over which lens 102 can receive and/or emit light) of, for example, approximately 0.64. Lens 102 can also have a chromatic aberration (e.g., chromatic distortion) of, for example, approximately 5.1 millimeters. Such a numerical aperture and/or chromatic aberration can, for example, increase the effectiveness (e.g., the illumination effectiveness) and/or decrease the size of bar code imager 100. However, embodiments of the present disclosure are not limited to a particular numerical aperture or chromatic aberration.

LED 104 can be, for example, a thin film LED (e.g., LED 104 can include a thin film material). For instance, LED 104 can be a high power enhanced thin film LED. Such LED types can, for example, increase the effectiveness (e.g., the illumination effectiveness) and/or decrease the size of bar code imager 100. However, embodiments of the present disclosure are not limited to a particular type of LED.

In the embodiment illustrated in Figure 1, LED 104 has a rectangular shape. For example, LED 104 can have a length and/or width of, for instance, approximately 0.4 millimeters. Such an LED shape and/or dimensions can, for example, increase the effectiveness (e.g., the illumination effectiveness) and/or decrease the size of bar code imager 100. However, embodiments of the present disclosure are not limited to a particular shape or dimensions for LED 104.

Although not shown in Figure 1, bar code imager 100 can include a light pipe, such as, for example, a tapered light pipe, coupled to LED 104 to transport and/or distribute light emitted by LED 104 toward lens 102. Such a light pipe can reduce the positional sensitivity of LED 104, which can be beneficial in some embodiments.

As shown in Figure 1, LED 104 can emit light toward lens 102. The light emitted by LED 104 can pass through lens 102 and become collimated (e.g., the rays of the light may pass through lens 102 and become nearly parallel), as illustrated in Figure 1. The collimated light can be directed to illuminate a bar code 108, as illustrated in Figure 1.

In one or more embodiments of the present disclosure, the illumination of bar code 108 can be substantially uniform across bar code 108. That is, the irradiance at the surface of bar code 108 can be distributed substantially uniformly across the surface of bar code 108. For instance, the illumination of bar code 108 can be a non-structured illumination (e.g., substantially all portions of bar code 108 can be illuminated approximately equally). Because the illumination of bar code 108 can be substantially uniform across bar code 108, bar code imager 100 can effectively illuminate bar code 108 and/or create an accurate and/or complete image of bar code 108.

Bar code 108 can be located a distance d2 from bar code imager 100 (e.g., from lens 102), as illustrated in Figure 1. Distance d2 can be, for example, at least two feet. For instance, distance d2 can be three feet, 24 feet, or 27 feet. However, embodiments of the present disclosure are not limited to a particular distance between bar code imager 100 and bar code 108.

The distance d2 between bar code imager 100 and bar code 108 (e.g., the distance d2 at which bar code imager 100 can effectively illuminate bar code 108 and/or create an accurate and/or complete image of bar code 108) can be greater than the distance at which previous bar code imagers can effectively illuminate bar codes and/or create accurate and/or complete images of bar codes. For example, the distance d2 at which bar code imager 100 can effectively illuminate bar code 108 and/or create an accurate and/or complete image of bar code 108 can be at least two feet, as previously described herein. In contrast, the distance at which previous bar code imagers can effectively illuminate bar codes and/or create accurate and/or complete images of bar codes can be a few inches, as previously described herein.

Figure 2 illustrates a portion of a bar code imager 201 in accordance with one or more embodiments of the present disclosure. As shown in Figure 2, bar code imager 201 includes a first lens 212-1 and a second lens 212-2. Bar code imager 201 also includes a first light-emitting diode (LED) 214-1 and a second LED 214-2. LED 214-1 can be coupled to LED 214-2, as illustrated in Figure 2.

Lens 212-1 can have a focal point 216-1 and a focal length f associated therewith, and lens 212-2 can have a focal point 216-2 and a focal length f associated therewith, as illustrated in Figure 2. Focal points 216-1 and 216-2 can be analogous to focal point 106 previously described in connection with Figure 1, and focal length *f* can be analogous to focal length f previously described in connection with Figure 1.

Although lenses 212-1 and 212-2 have the same focal length (e.g., *f*) in the embodiment illustrated in Figure 2, embodiments of the present disclosure are not so limited. For example, lenses 212-1 and 212-2 can have different focal lengths.

As shown in Figure 2, LED 214-1 is located within focal length f associated with lens 212-1, and LED 214-2 is located within focal length f associated with lens 212-2. That is, LED 214-1 is located between lens 212-1 and focal point 216-1, and LED 214-2 is located between lens 212-2 and focal point 216-2, as illustrated in Figure 2.

LED 214-1 can be located a distance d1 from focal point 216-1, and LED 214-2 can be located a distance d1 from focal point 216-2, as illustrated in Figure 2. Distance d1 can be, for example, analogous to distance d1 previously described in connection with Figure 1.

Although the distance between LED 214-1 and focal point 216-1 is the same as the distance between LED 214-2 and focal point 216-2 in the embodiment illustrated in Figure 2, embodiments of the present disclosure are not so limited. For example, the distance between LED 214-1 and focal point 216-1 can be different than the distance between LED 214-2 and focal point 216-2.

Lens 212-1 and/or lens 212-2 can be analogous to lens 102 previously described in connection with Figure 1. For example, lens 212-1 and/or lens 212-2 can be movable lenses. Additionally, lens 212-1 and/or lens 212-2 can be glass lenses and/or aspheric lenses. Further, lens 212-1 and/or 212-2 can have a numerical aperture of approximately 0.64 and/or a chromatic aberration of approximately 5.1 millimeters. Such a numerical aperture, chromatic aberration, and/or lens types can, for example, increase the effectiveness (e.g., the illumination effectiveness) and/or decrease the size of bar code imager 201. However, embodiments are not limited to a particular type of lens, numerical aperture, or chromatic aberration, as previously described herein.

LED 214-1 and/or LED 214-2 can be analogous to LED 104 previously described in connection with Figure 1. For example, LED 214-1 and/or LED 214-2 can be thin film LEDs. Additionally, LED 214-1 and/or LED 214-2 can have rectangular shapes. Such LED types, shapes, and/or dimensions can, for example, increase the effectiveness (e.g., the illumination effectiveness) and/or decrease the size of bar code imager 201. However, embodiments of the present disclosure are not limited to a particular type of LED, or to a particular shape or dimensions for LED 214-1 and/or LED 214-2.

LED 214-2 can be located a distance of, for example, approximately 8.32 millimeters from LED 214-1. For instance, the center of LED 214-2 can be located a distance of approximately 8.32 millimeters from the center of LED 214-1. Such a distance can, for example, increase the effectiveness (e.g., the illumination effectiveness) and/or decrease the size of bar code imager 201. However, embodiments of the present disclosure are not limited to a particular distance between LED 214-1 and/or LED 214-2.

In the embodiment illustrated in Figure 2, the distance between LED 214-1 and lens 212-1 is the same as the distance between LED 214-2 and lens 212-2. For example, LED 214-1 can be located a distance of approximately 1.72 millimeters from lens 212-1, and LED 214-2 can be located a distance of approximately 1.72 millimeters from lens 212-2. For instance, the surface of LED 214-1 facing lens 212-1 can be located a distance of approximately 1.72 millimeters from the surface of lens 212-1 facing LED 214-1, and the surface of LED 214-2 facing lens 212-2 can be located a distance of approximately 1.72 millimeters from the surface of lens 212-2 facing LED 214-2. However, embodiments of the present disclosure are not limited to a particular distance between LED 214-1 and lens 212-1 or between LED 214-2 and lens 212-2. For example, the distance between LED 214-1 and lens 212-1 can be different than the distance between LED 214-2 and lens 212-2.

In the embodiment illustrated in Figure 2, lens 212-1 is approximately centered with respect to LED 214-1, and lens 212-2 is approximately centered with respect to LED 214-2. For example, the center of lens 212-1 is approximately in line with the center of LED 214-1, and the center of lens 212-2 is approximately in line with the center of LED 214-2, as illustrated in Figure 1. However, embodiments of the present disclosure are not so limited. For example, lens 212-1 can be de-centered with respect to LED 214-1, and/or lens 212-2 can be de-centered with respect to LED 214-2. For instance, lens 212-1 can be de-centered with respect to LED 214-1 be approximately 0.1 millimeter, and/or lens 212-2 can be de-centered with respect to LED 214-2 by approximately 0.1 millimeter.

Although not shown in Figure 2, bar code imager 201 can include a first light pipe (e.g., a tapered light pipe) coupled to LED 214-1 and a second light pipe coupled to LED 214-2 to transport and/or distribute light emitted by LED 214-1 and 214-2 toward lens 212-1 and lens 212-2, respectively. Such light pipes can reduce the positional sensitivities of LED 214-1 and LED 214-2.

Although the embodiment illustrated in Figure 2 includes two lenses (e.g., 212-1 and 212-2) and two LEDs (e.g., 214-1 and 214-2), embodiments of the present disclosure are not so limited, and can include any number of lenses and LEDs. For example, bar code imager 201 can include a third lens and a third LED located within the focal length of the third lens, a fourth lens and a fourth LED located within the focal length of the fourth lens, etc.

As shown in Figure 2, LED 214-1 and LED 214-2 can emit light toward lens 212-1 and 212-2, respectively. The light emitted by LED 214-1 and 214-2 can pass through lens 212-1 and 212-2, respectively, and become collimated (e.g., the rays of the light may pass through lens 212-1 and 212-2 and become nearly parallel), as illustrated in Figure 2. The collimated light can be directed to illuminate a bar code 218, as illustrated in Figure 2.

In one or more embodiments of the present disclosure, the illumination of bar code 218 can be substantially uniform across bar code 218, in a manner analogous to that previously described in connection with Figure 1. Because the illumination of bar code 218 can be substantially uniform across bar code 218, bar code imager 201 can effectively illuminate bar code 218 and/or create an accurate and/or complete image of bar code 218.

Bar code 218 can be located a distance d2 from bar code imager 201 (e.g., from lens 212-1 and lens 212-2), as illustrated in Figure 2. Distance d2 can be, for example, analogous to distance d2 previously described in connection with Figure 1. Additionally, the distance d2 between bar code imager 201 and bar code 218 (e.g., the distance d2 at which bar code imager 201 can effectively illuminate bar code 218 and/or create an accurate and/or complete image of bar code 218) can be greater than the distance at which previous bar code imagers can effectively illuminate bar codes and/or create accurate and/or complete images of bar codes, in a manner analogous to that previously described in connection with Figure 1.

Including multiple lenses and multiple LEDs (e.g., lenses 212-1 and 212-2, and LEDs 214-1 and 214-2) in bar code imager 201 can further increase the range of bar code imager 201. For example, the multiple lenses and multiple LEDs can increase the amount (e.g., intensity) of light emitted by bar code imager 201 and/or the illumination of bar code 218 (e.g., the irradiance at bar code 218), which can further increase the distance d2 at which bar code imager 201 can effectively illuminate bar code 218 and/or create an accurate and/or complete image of bar code 218.

Another benefit of multiple lenses and multiple LEDs embodiments can include illuminating and/or imaging larger bar codes based upon directing the light emitted by the multiple LEDs to multiple areas. In some embodiments, the areas can be adjacent.

Although the distance between lens 212-1 and bar code 218 is the same as the distance between lens 212-2 and bar code 218 in the embodiment illustrated in Figure 2, embodiments of the present disclosure are not so limited. For example, the distance between lens 212-1 and bar code 218 can be different than the distance between lens 212-2 and bar code 218.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A bar code imager device (100, 201), comprising:
a lens (102, 212-1, 212-2), wherein the lens (102, 212-1, 212-2) has a focal length associated therewith; and
a light-emitting diode (104, 214-1, 214-2), wherein the light-emitting diode (104, 214-1, 214-2) is located within the focal length associated with the lens (102, 212-1, 212-2).

2. The device (100, 201) of claim 1, wherein the device (100, 201) is configured to substantially uniformly illuminate a bar code (118, 218) located at least two feet from the device (100, 201).

3. The device (100, 201) of claim 1, wherein the light-emitting diode (104, 214-1, 214-2) is located approximately 50 micrometers from a focal point of the lens (102, 212-1, 212-2).

4. The device (100, 201) of claim 1, wherein the light-emitting diode (104, 214-1, 214-2) is located approximately 100 micrometers from a focal point of the lens (102, 212-1, 212-2).

5. The device (100, 201) of claim 1, wherein the light-emitting diode (104, 214-1, 214-2) is located approximately 150 micrometers from a focal point of the lens (102, 212-1, 212-2).

6. The device (100, 201) of claim 1, wherein the light-emitting diode (104, 214-1, 214-2) is a thin film light-emitting diode.

7. The device (100, 201) of claim 1, wherein the lens (102, 212-1, 212-2) is a movable lens.

8. The device (100, 201) of claim 1, wherein the light-emitting diode (104, 214-1, 214-2) has a length of approximately 0.4 millimeters and a width of approximately 0.4 millimeters.

9. The device (100, 201) of claim 1, wherein the lens (102, 212-1, 212-2) is a glass aspheric lens.

10. The device (100, 201) of claim 1, wherein the lens (102, 212-1, 212-2) has a numerical aperture of approximately 0.64 and a chromatic aberration of approximately 5.1 millimeters.
